# FASCICULE DE BREVET EUROPEEN

(11) **EP 3 247 822 B1**
(45) Date de publication et mention de la délivrance du brevet: **13.02.2019**
(21) Numéro de dépôt: 16701840.7
(22) Date de dépôt: 14.01.2016
(51) Int. Cl.: C25D 9/02, H01M 8/0234, B05D 1/18, H01M 8/1018

(54) **COUCHE DE DIFFUSION GAZEUSE POUR PILE A COMBUSTIBLE, CONSTITUEE PAR UN SUBSTRAT EN CARBONE GREFFE AVEC UN GROUPEMENT AROMATIQUE**
BRENNSTOFFZELLEN-GAS-DIFFUSIONSSCHICHT AUS EINEM MIT EINER AROMATISCHEN GRUPPIERUNG GEPFROPFTEN KOHLENSTOFFSUBSTRAT
FUEL CELL GAS DIFFUSION LAYER MADE UP OF A CARBON SUBSTRATE GRAFTED WITH AN AROMATIC GROUPING

(30) Priorité: 22.01.2015 FR 1550497
(43) Date de publication de la demande: 29.11.2017
(73) Titulaire: Commissariat à l'Énergie Atomique et aux Énergies Alternatives, 75015 Paris (FR)
(72) Inventeur: THOMAS, Yohann, 38000 Grenoble (FR); BENAYAD, Anass, 38000 Grenoble (FR); MORIN, Arnaud, 38700 Corenc (FR); PAUCHET, Joël, 38410 Saint Martin d'Uriage (FR); SCHRODER, Maxime, 02620 Buironfosse (FR)
(74) Mandataire: Cabinet Laurent & Charras
(86) Numéro de dépôt international: PCT/FR2016/050061
(87) Numéro de publication internationale: WO 2016/116683

(56) Documents cités:
- US-A1- 2005 233 183
- US-B1- 6 399 202
- CATHERINE COMBELLAS ET AL: "Steric Effects in the Reaction of Aryl Radicals on Surfaces", LANGMUIR, vol. 25, no. 1, 6 janvier 2009 (2009-01-06), pages 286-293, XP055227495, NEW YORK, NY; US ISSN: 0743-7463, DOI: 10.1021/la8025792
- L. SERVINIS ET AL: "A novel approach to functionalise pristine unsized carbon fibre using in situ generated diazonium species to enhance interfacial shear strength", JOURNAL OF MATERIALS CHEMISTRY A, vol. 3, no. 7, 25 novembre 2014 (2014-11-25), pages 3360-3371, XP055227755, ISSN: 2050-7488, DOI: 10.1039/C4TA04798B

## Description

### DOMAINE DE L'INVENTION

La présente invention concerne une couche de diffusion gazeuse (GDL) pour pile à combustible, constituée par un substrat en carbone greffé avec au moins un groupement aromatique. Le substrat en carbone peut ainsi être greffé avec des groupements hydrophobes et/ou hydrophiles.

Le domaine d'utilisation de la présente invention concerne notamment le stockage de l'énergie sous forme chimique, particulièrement les piles à combustible à membrane échangeuse de protons

### ETAT ANTERIEUR DE LA TECHNIQUE

Une pile à combustible de type PEMFC (de l'acronyme anglo-saxon « *proton exchange membrane fuel cell* ») comprend généralement au moins un assemblage membrane-électrodes dans lequel la membrane est positionnée entre la cathode et l'anode.

Chacune des électrodes est généralement associée à une couche de diffusion gazeuse ou GDL (de l'acronyme anglo-saxon « *Gaz Diffusion Layer*»). Chaque GDL est en contact avec un collecteur de courant qui permet d'acheminer les électrons via un circuit externe à la pile à combustible.

Ainsi, une pile à combustible comprend généralement l'empilement suivant :
- premier collecteur de courant ;
- GDL;
- première électrode ;
- membrane ;
- deuxième électrode de signe opposé à la première électrode ;
- GDL;
- deuxième collecteur de courant.

Typiquement, une GDL est poreuse afin d'assurer le flux des réactifs et des produits de réaction. Elle est électroniquement et thermiquement conductrice, résistante à la corrosion, et présente des propriétés de résistance mécanique compatibles à la pression d'assemblage d'une pile à combustible.

De manière générale, une GDL présente des propriétés hydrophobes. C'est également le cas d'autres matériaux utilisés pour concevoir une pile à combustible, tels que la couche de diffusion, la couche microporeuse MPL (de l'acronyme anglo-saxon « *MicroPorous Layer* ») ou la couche active (couche catalytique).

Dans une GDL, les propriétés hydrophobes sont nécessaires afin d'évacuer l'eau produite à la cathode. En effet, si l'eau n'est pas évacuée, la cathode peut se noyer et empêcher l'arrivée du gaz réactif. La présence d'une trop grande quantité d'eau peut ainsi diminuer les performances de la pile à combustible.

Une technique permettant d'améliorer les propriétés hydrophobes de la GDL ou de la MPL, consiste notamment en un traitement avec une émulsion à base de PTFE (polytétrafluoroéthylène).

Cependant, ce procédé présente les inconvénients suivants :
- réduction de la porosité de la GDL, ce qui peut perturber les mécanismes de transport des gaz ou des liquides à l'intérieur de la pile à combustible ;
- augmentation de la résistivité de contact en fonction de la quantité de PTFE ;
- dégradation du PTFE dans les conditions de fonctionnement de la pile à combustible ;
- manque d'homogénéité du dépôt de PTFE, notamment dans l'épaisseur de la GDL. Les fibres de carbone ou le graphite ne sont généralement pas intégralement recouverts de PTFE.

Le brevet US 6,399,202 B1 divulgue une couche de diffusion gazeuse fabriquée à partir d'un noir de carbone modifié par le greffage en deux étapes d'un groupement aryl portant un groupe fonctionnel hydrophile (-SO₃H) puis d'un groupement aryl portant un groupe fonctionnel hydrophobe (-CF₃).

Le Demandeur a mis au point un procédé permettant de résoudre ces problèmes techniques, en greffant sur le carbone une molécule ayant des propriétés hydrophobes et/ou hydrophiles. Ce traitement est particulièrement adapté aux couches de diffusion gazeuse présentes dans les piles à combustible.

### EXPOSE DE L'INVENTION

Le principe de l'invention repose sur le greffage de sels de diazonium (composé organique comportant le groupement N₂⁺) sur une surface carbonée, qui est avantageusement destinée à être utilisée dans une couche de diffusion gazeuse (GDL) d'une pile à combustible.

Plus précisément, la présente invention concerne une couche de diffusion gazeuse pour pile à combustible, constituée par un substrat en carbone greffé avec au moins un groupement aromatique de formule (II) : 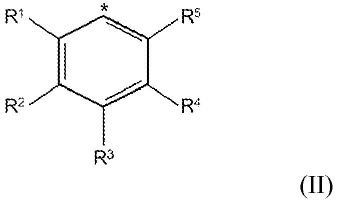 dans laquelle :
▪ l'astérisque * désigne un atome de carbone étant dépourvu d'hydrogène et de groupement Rⁱ, i = 1 à 5, et étant lié de façon covalente au substrat en carbone ;
▪ au moins deux des groupements R¹, R², R³, R⁴ et R⁵ sont différents d'un atome d'hydrogène ;
▪ au moins deux des groupements R¹, R², R³, R⁴ et R⁵ sont des groupements hydrophobes ou des groupements hydrophiles ou un groupement hydrophobe et un groupement hydrophile.

La présente invention concerne également un procédé de préparation de la couche de diffusion gazeuse, caractérisé en ce que la couche de diffusion gazeuse est obtenue par mise en contact d'un substrat en carbone avec une solution de sel de diazonium de formule (I), puis par réduction du sel de diazonium de formule (I) 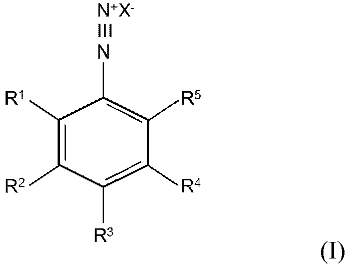 dans laquelle :
▪ au moins deux des groupements R¹, R², R³, R⁴ et R⁵ sont différents d'un atome d'hydrogène ;
▪ au moins deux des groupements R¹, R², R³, R⁴ et R⁵ sont des groupements hydrophobes ou des groupements hydrophiles ou un groupement hydrophobe et un groupement hydrophile.

La couche de diffusion gazeuse est avantageusement obtenue par un procédé de greffage d'un substrat en carbone comprenant les étapes suivantes :
a) préparation d'une solution contenant au moins un sel de diazonium de formule (1) ;
b) mise en contact d'un substrat en carbone avec cette solution de sel de diazonium ;
c) greffage du substrat en carbone par réduction du sel de diazonium ;
d) obtention d'un substrat en carbone greffé avec le groupement aromatique de formule (C₆R¹R²R³R⁴R⁵).

Le contre-ion X- peut notamment être un halogénure.

Un composé ou groupement hydrophobe est généralement caractérisé par son manque d'affinité avec l'eau. De manière générale, il ne peut pas créer de liaisons hydrogènes avec des molécules d'eau.

Au contraire, un composé ou groupement hydrophile est apte à interagir avec l'eau notamment par formation de liaisons hydrogènes.

L'homme du métier sait parfaitement distinguer ces deux types de composés ou groupements.

### Etape a)

L'étape a) consiste à préparer une solution de sel de diazonium de formule (I).

Ce sel comprend le groupement aromatique (C₆R¹R²R³R⁴R⁵) correspondant à la formule (II) dans laquelle l'astérisque * désigne un atome de carbone étant dépourvu d'hydrogène et de groupement Rⁱ (i = 1 à 5) et étant lié de façon covalente au substrat en carbone :

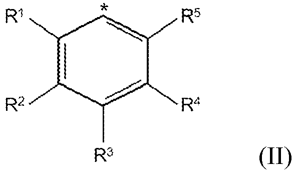

De manière avantageuse, les groupements R¹, R², R³, R⁴ et R⁵ sont indépendamment les uns des autres choisis dans le groupe comprenant :
- C(=O)O⁻Y⁺ ; SO₃Y⁺ ; CH₂-SO₃⁻Y⁺ ; NR₃⁺X⁻ ; OH ; PO₃H⁻Y⁺ ;
- H ; F ; CₙF₂ₙ₊₁ ; CₙH₂ₙ₊₁ ;
- NO₂ ; -O-CH₂-O- ; les groupements imidazoles ; et les dérivés de groupements imidazoles ;
avec Y = H, Na, K, Li, NR'₄ ; X= F, Cl, Br, I ;
n étant un nombre entier avantageusement compris entre 1 et 10 ;
R = CₘH₂ₘ₊₁ ; R' = H, CₘH₂ₘ₊₁ et leurs mélanges, m étant un nombre entier avantageusement compris entre 1 et 10.

Selon un mode de réalisation particulier, les groupements Rⁱ (i = 1 à 5) peuvent notamment être correspondre à l'une des combinaisons suivantes :
- R¹ = R³ = R⁵ = H et R² = R⁴ = CF₃ ;
- R¹ = R⁴ = R⁵ = H et R² + R³ = -O-CH₂-O- ;
- R¹ = R³ = R⁵ = H ; R² = CF₃ et R⁴ = C(=O)O⁻Y⁺ ; et
- R² = R³ = R⁵ = H ; R¹ = SO₃⁻Y⁺ et R⁴ = CF₃.

De manière avantageuse, deux des groupements Rⁱ (i = 1 à 5) sont des groupements CF₃.

Le groupement CF₃ est une fonction proche de celle du PTFE (polytétrafluoroéthylène) qui est couramment utilisé pour conférer des propriétés hydrophobes à un substrat.

Le groupement aromatique (C₆R¹R²R³R⁴R⁵) de formule (II) est particulièrement attrayant étant donné qu'il permet de générer un pont électronique entre le substrat en carbone et le groupement Rⁱ (i = 1 à 5).

Selon un mode de réalisation particulier, le sel de diazonium mis en oeuvre dans l'étape a) peut être préparé en présence d'au moins un agent nitrosant et d'une amine de formule (III) :

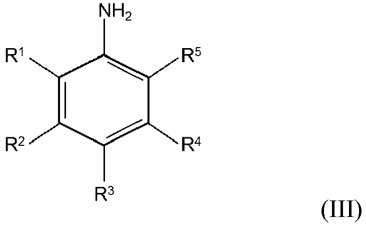

De manière avantageuse, la quantité d'agent nitrosant permettant d'obtenir le sel de diazonium de formule (I) à partir de l'amine de formule (III) représente entre 1 et 10 équivalents molaires par rapport au nombre de moles d'amine, plus avantageusement entre 1 et 5.

L'agent nitrosant utilisé pour préparer le sel de diazonium à partir de l'amine de formule (III) est avantageusement le nitrite de sodium NaNO₂ ou l'acide nitreux HNO₂. Il s'agit préférentiellement de NaNO₂.

La formation du sel de diazonium est généralement réalisée en présence d'un acide. Celui est avantageusement l'acide sulfurique H₂SO₄ ; l'acide phosphorique H₃PO₄ ; ou l'acide hypophosphoreux H₃PO₂.

Cette réaction est avantageusement réalisée en solution aqueuse, à une température avantageusement comprise entre 15 et 30°C. Le pH de cette solution est avantageusement compris entre 0 et 2, plus avantageusement entre 0 et 1.

Une fois le sel de diazonium préparé, il peut être isolé puis utilisé pour préparer la solution de l'étape a).

Selon un autre mode de réalisation, le sel de diazonium est préparé in situ dans la solution mise en oeuvre dans l'étape a).

La solution de greffage préparée dans l'étape a) est avantageusement une solution aqueuse. Elle présente un pH pouvant être compris entre 0 et 2, avantageusement entre 0 et 1.

De manière générale, une solution aqueuse est une solution dont le solvant majoritaire est l'eau, et préférentiellement uniquement l'eau.

Une fois la solution de sel de diazonium préparée, elle peut être mise en oeuvre dans l'étape b).

Ainsi, et selon un mode de réalisation particulier, le procédé de greffage peut comprendre les étapes suivantes :
a) nitrosation d'une amine primaire aromatique de formule (III) en milieu acide et aqueux de manière à obtenir un sel de diazonium de formule (I) ;
b) mise en contact d'un substrat en carbone avec cette solution contenant le sel de diazonium ;
c) réduction des ions diazonium par voie électrochimique.

### Etape b)

L'étape b) consiste à mettre en contact un substrat en carbone avec la solution de sel de diazonium.

Le substrat en carbone est avantageusement poreux. De manière générale, il présente deux faces principales.

Typiquement, le substrat en carbone peut se présenter sous forme d'un matériau choisi dans le groupe comprenant : non-tissé en carbone ; tissu de carbone ; feutre de carbone ; toile de carbone ; papier de carbone ; graphite ; noir de carbone ; nanotubes de carbone ; et graphène.

Le substrat en carbone présente une épaisseur avantageusement comprise entre 100 et 500 micromètres, notamment pour une application en tant que couche de diffusion gazeuse.

Il est préférentiellement constitué de fibres de carbone. Ces fibres présentent un diamètre avantageusement compris entre 5 et 15 micromètres.

De manière avantageuse, il s'agit d'un non-tissé de fibres de carbone.

Selon un mode de réalisation particulier, lors de la mise en contact de l'étape b), le substrat peut être immergé dans la solution de sel de diazonium. Ainsi, le substrat peut être imprégné à coeur et donc greffé à coeur.

Selon un autre mode de réalisation particulièrement adapté au cas où le substrat présente deux faces principales, lors de la mise en contact de l'étape b), le substrat peut être traité par dépôt de la solution sur au moins une de ses faces. Ainsi, chaque face principale du substrat peut être traitée spécifiquement. La quantité et la nature du groupement de formule (II) peut ainsi être adaptée en fonction de la face du substrat, celle-ci pouvant être notamment en contact avec un collecteur de courant ou avec une électrode (couche active ou couche microporeuse par exemple).

Selon un autre mode de réalisation particulier, le substrat en carbone peut être oxydé préalablement à sa mise en contact avec la solution de sel de diazonium.

Cette oxydation permet notamment d'augmenter l'hydrophilicité du substrat en carbone, préalablement au greffage de l'étape c). Ainsi, le rapprochement du sel de diazonium et du substrat en carbone est favorisé, ce qui améliore le taux de greffage.

### Etape c)

L'étape c) du procédé permet de greffer un substrat en carbone avec le groupement de formule (II), par réduction du sel de diazonium.

La réduction du sel de diazonium peut être réalisée par voie chimique ou par voie électrochimique.

La réduction par voie électrochimique (électro-réduction) permet généralement de mieux contrôler le greffage par rapport à la réduction par voie chimique.

La réduction des ions diazonium par voie électrochimique permet de précisément contrôler cette réaction et la cinétique de greffage. En effet, en réalisant des voltamétries cycliques, il est possible de suivre cette réaction puisque l'on observe un pic correspondant au potentiel de réduction de l'ion diazonium lors du premier cycle, puis une diminution du courant qui indique un recouvrement progressif de la surface par les molécules greffées lors des cycles suivants.

La réduction électrochimique permet ainsi de prédéterminer et d'optimiser le taux de greffage.

De manière avantageuse, l'électro-réduction du sel de diazonium est réalisée par génération électrochimique d'un électron par molécule de sel de diazonium.

De manière avantageuse, la réduction du sel de diazonium par voie chimique peut être réalisée par mise en contact du substrat en carbone avec les différents réactifs (agent nitrosant tel que le NaNO₂, amine) dans une solution aqueuse acide. Les étapes a), b) et c) peuvent ainsi être combinées.

Selon un mode de réalisation particulier, la réduction par voie chimique peut être facilitée par la présence d'un agent réducteur, notamment un composé pouvant être choisi parmi l'acide hypophosphoreux H₃PO₂, le ferrocène Fe(C₅H₅)₂, et des poudres de fer (fer métallique).

La réduction du sel de diazonium par voie chimique peut également être facilitée par irradiation photochimique, c'est-à-dire par exposition à un rayonnement électromagnétique.

Une fois le greffage réalisé, le substrat en carbone est avantageusement rincé, avantageusement avec de l'eau dé-ionisée.

Après le greffage, le cas échéant après le rinçage, le substrat en carbone est avantageusement séché.

### Etape d)

Eu égard à ses propriétés de conducteur électronique (carbone), de porosité (fibres de carbone), et d'hydrophobicité (greffage du groupement de formule (II) (C₆R¹R²R³R⁴R⁵)), le substrat en carbone greffé est particulièrement adapté pour une utilisation en tant que couche de diffusion dans une pile à combustible notamment.

Comme déjà indiqué, ce procédé permet d'ajuster les propriétés du substrat greffé en fonction de la nature et de la quantité de groupements de formule (II) (C₆R¹R²R³R⁴R⁵) greffés.

Ainsi, selon un mode de réalisation particulier, le substrat en carbone peut présenter deux faces principales qui sont chacune soumises à un greffage distinct. En d'autres termes, une face principale peut être greffée avec un groupement hydrophobe Rⁱ (i = 1 à 5), alors que l'autre face principale peut être greffée avec un groupement hydrophobe différent ou avec un groupement hydrophile. Il s'agit alors d'un greffage mixte : hydrophobe ou hydrophile selon la face principale du substrat.

Selon un autre mode de réalisation particulier, les étapes b) et c) peuvent consister à :
- greffer une première face principale du substrat avec une première solution d'un premier sel de diazonium de formule (I) ; puis à
- greffer une deuxième face principale du substrat avec une deuxième solution d'un deuxième sel de diazonium de formule (I), le premier et le deuxième sel de diazonium étant distincts l'un de l'autre.

Eu égard aux substituants du groupement de formule (II), ce procédé permet de contrôler la quantité de groupements greffés et ainsi l'hydrophobicité du substrat en carbone. En effet, il est possible de choisir la quantité de groupements qui sont greffés et leurs propriétés hydrophobes et/ou hydrophiles en ajustant la nature des groupements R¹ à R⁵. Un tel contrôle du greffage n'est pas possible avec les procédés de l'art antérieur étant donné qu'ils ne permettent pas d'introduire en même temps les deux types de fonctionnalités hydrophobes et hydrophiles.

En outre, lorsque le groupement de formule (II) comprend un substituant Rⁱ (i = 1 à 5) hydrophobe et un substituant R^{i'} (i' = 1 à 5, i' ≠ i) hydrophile, la répartition des propriétés hydrophiles et hydrophobes est homogène étant donné que le procédé permet leur greffage simultané.

Le substrat en carbone greffé peut notamment être utilisé dans une pile à combustible, par exemple en tant que couche de diffusion gazeuse.

Il est avantageusement mis en oeuvre dans une pile à combustible électrolyte membranaire et notamment à membrane échangeuse de protons de type PEMFC.

La présente invention concerne une couche de diffusion gazeuse constituée du substrat en carbone susceptible d'être obtenu par le procédé décrit ci-dessus. Elle concerne aussi une pile à combustible comprenant au moins une couche de diffusion gazeuse de ce type.

Le substrat en carbone selon l'invention peut également être utilisé dans un accumulateur mais aussi dans les domaines de l'électrolyse ou de la catalyse.

L'invention et les avantages qui en découlent ressortiront mieux des figures et exemples suivants donnés afin d'illustrer l'invention et non de manière limitative.

### DESCRIPTION DES FIGURES

La figure 1 correspond au voltampérogramme cyclique obtenu pour un non-tissé en carbone avant et après greffage hydrophobe.
La figure 2 correspond aux spectres XPS d'un substrat en carbone avant et après greffage.
La figure 3 correspond à une vue agrandie de la région C1s des spectres XPS d'un substrat en carbone avant et après greffage.
La figure 4 correspond à une vue agrandie de la région F1s des spectres XPS d'un substrat en carbone après greffage.
La figure 5 correspond aux courbes de polarisation à 60°C et 100% d'humidité relative d'un substrat en carbone avant et après greffage selon la présente invention.
La figure 6 correspond aux courbes de polarisation à 80°C et 50% d'humidité relative d'un substrat en carbone avant et après greffage selon la présente invention.
La figure 7 correspond aux courbes de polarisation à 80°C et 20% d'humidité relative d'un substrat en carbone avant et après greffage selon la présente invention.

### EXEMPLES DE REALISATION DE L'INVENTION

Quatre couches de diffusion gazeuse (GDL) ont été préparées. Il s'agit de contre-exemples (CE-1 à CE-3) et d'une GDL selon la présente invention (INV-1). Ces GDL ont été préparées et testées dans une configuration de pile bouton.

**Tableau 1 : Caractéristiques des couches GDL étudiées**

| Exemple | GDL^{(a)} | traitement hydrophobe | molécule greffée |
|---|---|---|---|
| CE-1 | carbone | - | - |
| CE-2 | carbone | (b) | - |
| CE-3 | carbone | (c) | 1-CF₃ |
| INV-1 | carbone | (d) | 2-CF₃ |

| | | | |
|---|---|---|---|
| (a) non tissé en carbone (référence GDL 24AA de chez SGL, matériau dépourvu de traitement hydrophobe) (b) traitement hydrophobe obtenu par dépôt (immersion puis frittage) de PTFE (polytétrafluoroéthylène), la référence commerciale étant : GDL 24BA de chez SGL comprenant 5 % en poids de PTFE. (c) greffage avec 1-CF₃ (4-(trifluorométhyl)phényl)) (d) greffage avec 2-CF₃ (3,5-bis(trifluorométhyl)phényl)) | | | |

### 1) Préparation de la GDL selon l'invention (INV-1)

Un non-tissé en carbone est greffé avec un groupement hydrophobe de type 2-CF₃ (INV-1).

Le greffage comprend les étapes suivantes :
- formation d'un sel de diazonium par addition d'un excès d'agent oxydant (NaNO₂, 4mM, excès par rapport à l'amine) dans une solution aqueuse d'acide chlorhydrique (0.5M) et d'amine (2mM), l'amine étant le 3,5-bis(trifluorométhyl)aniline (numéro CAS: 328-74-5).
- réduction du sel de diazonium par voie électrochimique en présence d'un non-tissé en carbone. Au moins 50 cycles de variations linéaires d'un potentiel de 0,2 V à-1,0V vs Hg/Hg₂SO₄ ont été réalisés. Dans ces conditions, un nombre de cycle supérieur ne change rien au procédé de greffage.
- obtention d'une GDL greffée hydrophobe.

### 2) Mise en évidence du greffage par cyclovoltamétrie

Le greffage est caractérisé par voltamétrie cyclique de la GDL greffée (CE-3 et INV-1) en présence du couple d'oxydoréduction de ferrocyanure/ferricyanure ([Fe(CN)₆]⁴⁻ / [Fe(CN)₆]³⁻) qui est très sensible à l'état de surface du matériau étudié.

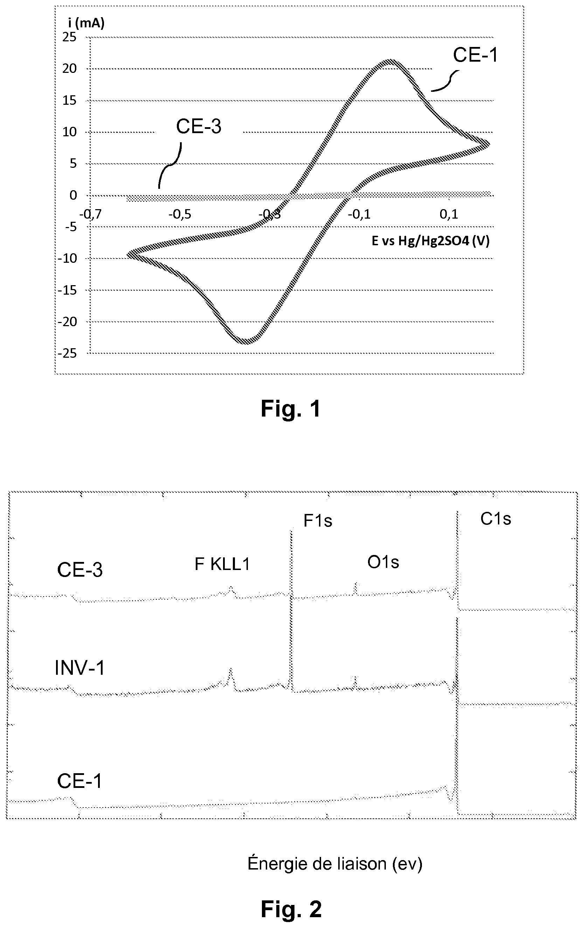

La figure 1 représente les résultats obtenus avant greffage (CE-1) et après greffage (CE-3). Il s'agit d'un voltampérogramme cyclique obtenu à 50mV/s en présence du couple [Fe(CN)₆]⁴⁻ / [Fe(CN)₆]³⁻.

Avant greffage, les pics d'oxydoréduction du couple ferrocyanure /ferricyanure sont bien présents (CE-1).

Après greffage (CE-3), les pics d'oxydoréduction du couple ferrocyanure/ ferricyanure ne sont plus visibles. En effet, les espèces greffées génèrent une résistance au transfert de charge pour le couple [Fe(CN)₆]⁴⁻ / [Fe(CN)₆]³⁻ qui confirme le greffage du groupement hydrophobe de type 1-CF₃.

### 3) Caractérisation par XPS

La spectroscopie photoélectronique à rayonnement-X (XPS) est une technique non-destructive d'extrême surface (profondeur d'analyse ∼5nm) qui permet de sonder la structure électronique et les modifications chimiques à la surface des GDL après greffage.

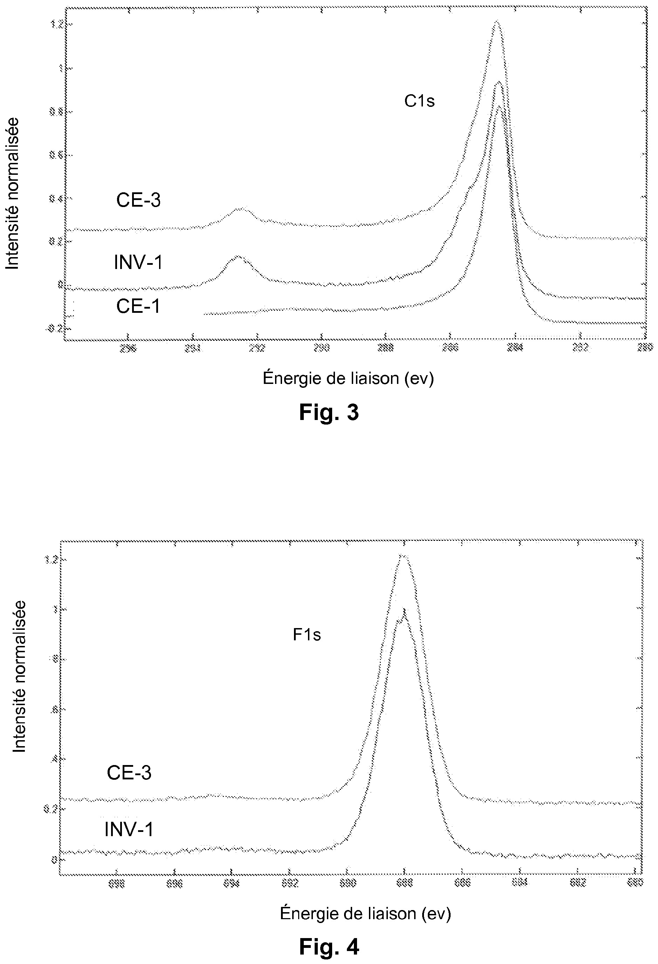

Le spectre général enregistré après le greffage des sels diazonium des composés 1-CF₃ et 2-CF₃ sur des couches de diffusion gazeuse (GDL) indique la présence de groupements fluorés (figures 2 et 3).

L'analyse en haute résolution des pics de coeurs C1s, F1s et O1s donne des informations sur l'efficacité du processus de greffage (figures 2 à 4).

Avant greffage, la GDL s'apparente à du carbone de type graphitique, avec une forte présence de carbones en hybridation sp2 et des pics d'oscillation plasmonique (π-π*).

Après greffage, le pic de coeur C1s indique l'apparition d'un nouveau pic vers les hautes énergies de liaison (292.45 eV) attribué à des carbones liés à trois atomes de fluor.

La présence, également, de pics C1s en hybridation sp2 et des bandes plasmoniques (π-π*) indique que le greffage a bien eu lieu. Ce résultat est corroboré par la détection du pic F1s à 688.0 eV qui est la signature du fluor et liaison -Ph-CF₃.

Le pic de coeur C1s montre également que la surface des GDL est fonctionnalisée par d'autres groupements C-OH, -COO, et -Ph-CH₂.

La présence de groupements -OH, -OOH, induirait un caractère hydrophile à la surface des GDL en carbone.

La spectroscopie XPS permet également, de suivre le caractère hydrophobe/hydrophile des échantillons en quantifiant le pourcentage atomique des liaisons C-F/C-O, -COO à la surface de la GDL après greffage.

### 4) Tests en pile

Des assemblages membrane/électrodes (AME) ont été préparés par pressage à chaud de deux GDL (avec ajout d'une couche microporeuse et d'une couche catalytique communes à tous les AME) de chaque côté d'une membrane échangeuse de protons en Nafion®. L'étape de pressage permet d'assurer une bonne connexion interfaciale et une bonne cohésion entre la GDL et la membrane.

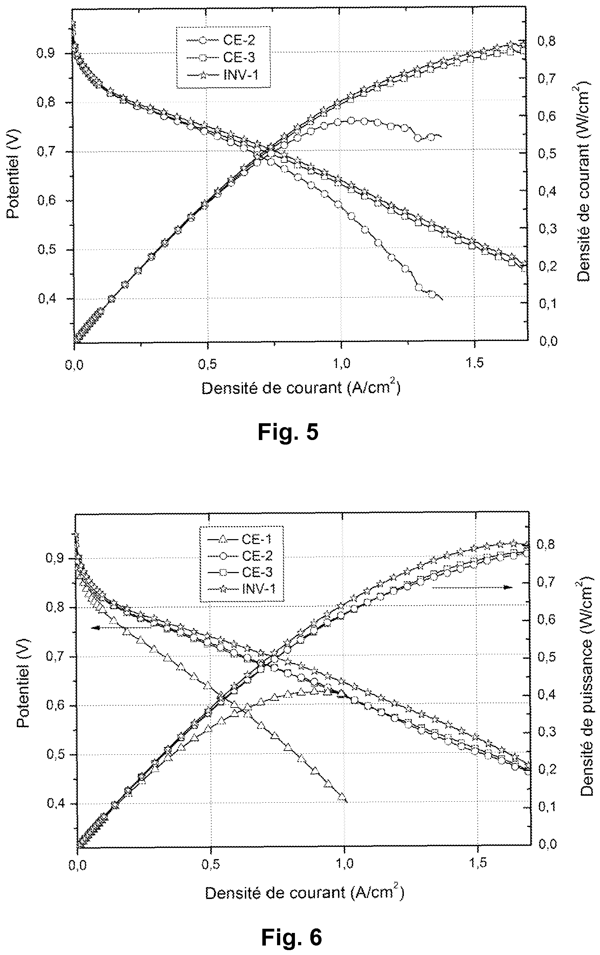

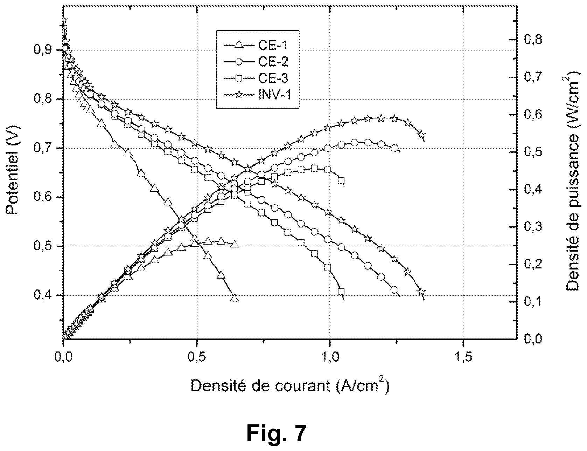

Trois types de conditions ont été testés afin de mettre en évidence le caractère hydrophobe des GDL :
- conditions humides : 60°C et 100% HR (humidité relative) (figure 5) ;
- conditions automobile : 80°C et 50% HR (figure 6) ; et
- conditions 80°C + 20% HR (figure 7).

La figure 5 montre que les performances correspondant à la GDL greffée (INV-1) sont supérieures à celles de la GDL CE-2 traitée hydrophobe.

En outre, aucune limitation au transport de masse est observée ce qui indique qu'il n'y a pas de noyage dans la pile, spécialement à la cathode.

La figure 5 montre également que les performances correspondant aux GDL greffées (CE-3 et INV-1) sont supérieures à celles d'un GDL ayant subi un traitement hydrophobe (CE-2). En outre, les performances de la GDL greffée selon l'invention (INV-1) sont supérieures à celles de la GDL greffée avec un composé mono-substitué (CE-3). Les performances de la GDL CE-1 ne sont pas représentées car elles sont trop faibles.

La figure 6 montre que les performances correspondant à la GDL greffée avec un composé bi-substitué (INV-1) sont meilleures que toutes les autres.

Plus généralement, la figure 7 montre que les performances des GDL testées peuvent être classées selon l'ordre suivant : INV-1 > CE-3 > CE-2 > CE-1.

Les résultats les moins intéressants concernent la GDL n'ayant pas subi de traitement hydrophobe (CE-1). Un traitement hydrophobe de type PTFE permet d'améliorer les performances (CE-2). Cependant, les meilleurs résultats concernent les GDL greffées avec un composé mono (CE-3) ou bi substitué (INV-1).

De manière surprenante, le Demandeur a constaté que la présence de deux substituants permet d'améliorer les performances de la GDL quand bien même ces modifications peuvent engendrer d'autres problèmes tels que l'augmentation des contraintes stériques.

En outre, la présence de deux substituants peut permettre d'introduire simultanément des propriétés hydrophobes et hydrophiles.

## Revendications

1. Couche de diffusion gazeuse pour pile à combustible, constituée par un substrat en carbone greffé avec au moins un groupement aromatique de formule (II) : 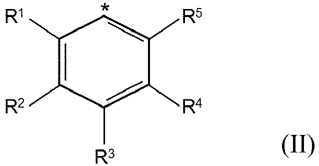 dans laquelle :
▪ l'astérisque * désigne un atome de carbone étant dépourvu d'hydrogène et de groupement Rⁱ, i = 1 à 5, et étant lié de façon covalente au substrat en carbone ;
▪ au moins deux des groupements R¹, R², R³, R⁴ et R⁵ sont différents d'un atome d'hydrogène ;
▪ au moins deux des groupements R¹, R², R³, R⁴ et R⁵ sont des groupements hydrophobes ou des groupements hydrophiles ou un groupement hydrophobe et un groupement hydrophile.

2. Couche de diffusion gazeuse selon la revendication 1, ***caractérisée* en ce que** les groupements R¹, R², R³, R⁴ et R⁵ sont indépendamment les uns des autres choisis dans le groupe comprenant :
- C(=O)O⁻Y⁺ ; SO₃Y⁺ ; CH₂-SO₃⁻Y⁺ ; NR₃⁺X⁻ ; OH ; PO₃H⁻Y⁺ ;
- H ; F ; CₙF₂ₙ₊₁ ; CₙH₂ₙ₊₁ ;
- NO₂ ; -O-CH₂-O- ; les groupements imidazoles ; et les dérivés de groupements imidazoles ;
avec Y = H, Na, K, Li, NR'₄ ; X= F, Cl, Br, I ;
n étant un nombre entier compris entre 1 et 10 ;
R = CₘH₂ₘ₊₁ ; R' = H, CₘH₂ₘ₊₁ et leurs mélanges, m étant un nombre entier compris entre 1 et 10.

3. Couche de diffusion gazeuse selon la revendication 2, ***caractérisée* en ce que** les groupements R¹, R², R³, R⁴ et R⁵ correspondent à l'une des combinaisons suivantes :
- R¹ = R³ = R⁵ = H et R² = R⁴ = CF₃ ;
- R¹ = R⁴ = R⁵ = H et R² + R³ = -O-CH₂-O- ;
- R¹ = R³ = R⁵ = H ; R² = CF₃ et R⁴ = C(=O)O⁻Y⁺ ; et
- R² = R³ = R⁵ = H ; R¹ = SO₃⁻Y⁺ et R⁴ = CF₃.

4. Couche de diffusion gazeuse selon l'une des revendications 1 à 3, ***caractérisée* en ce que** le substrat en carbone se présente sous forme d'un matériau choisi dans le groupe comprenant : non-tissé en carbone ; tissu de carbone ; feutre de carbone ; toile de carbone ; papier de carbone ; et graphite ; noir de carbone ; nanotubes de carbone ; et graphène.

5. Couche de diffusion gazeuse selon l'une des revendications 1 à 4, ***caractérisée* en ce que** le substrat en carbone présente une épaisseur comprise entre 100 et 500 micromètres.

6. Procédé de préparation de la couche de diffusion gazeuse selon l'une des revendications 1 à 5, ***caractérisé* en ce que** la couche de diffusion gazeuse est obtenue par mise en contact d'un substrat en carbone avec une solution de sel de diazonium de formule (I), puis par réduction du sel de diazonium de formule (I) 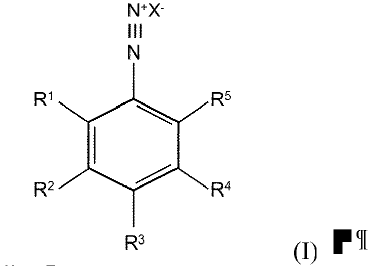 dans laquelle :
• au moins deux des groupements R¹, R², R³, R⁴ et R⁵ sont différents d'un atome d'hydrogène ;
• au moins deux des groupements R¹, R², R³, R⁴ et R⁵ sont des groupements hydrophobes ou des groupements hydrophiles ou un groupement hydrophobe et un groupement hydrophile.

7. Procédé selon la revendication 6, ***caractérisé* en ce que** le substrat en carbone est oxydé préalablement à sa mise en contact avec la solution de sel de diazonium.

8. Procédé selon la revendication 6, ***caractérisé* en ce que** la réduction du sel de diazonium est réalisée :
- par voie électrochimique par génération électrochimique d'un électron par molécule de sel de diazonium ; ou
- par voie chimique.

9. Procédé selon la revendication 6, ***caractérisé* en ce que** la mise en contact entre le substrat en carbone et la solution aqueuse consiste :
- à greffer une première face principale du substrat avec une première solution d'un premier sel de diazonium de formule (I) ; puis
- à greffer une deuxième face principale du substrat avec une deuxième solution d'un deuxième sel de diazonium de formule (I), le premier et le deuxième sel de diazonium étant distincts l'un de l'autre.

10. Pile à combustible comprenant au moins une couche de diffusion gazeuse selon l'une des revendications 1 à 5.

## Patentansprüche

1. Gas-Diffusionsschicht für Brennstoffzellen, bestehend aus einem Kohlenstoffsubstrat, gepfropft mit mindestens einer aromatischen Gruppe mit der Formel (II) 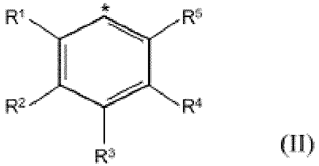 bei der:
▪ das Sternchen * ein Kohlenstoffatom ohne Wasserstoff- und ohne R'- Gruppe mit i = 1 bis 5 bezeichnet und kovalent an das Kohlenstoffsubstrat gebunden ist;
▪ mindestens zwei der Gruppen R¹, R², R³, R⁴ und R⁵ sich in einem Wasserstoffatom unterscheiden;
▪ mindestens zwei der Gruppen R¹, R², R³, R⁴ und R⁵ hydrophobe Gruppen sind oder hydrophile Gruppen oder eine hydrophobe Gruppe und eine hydrophile Gruppe.

2. Gas-Diffusionsschicht für Brennstoffzellen gemäß Anspruch 1, **dadurch gekennzeichnet, dass** die Gruppen R¹, R², R³, R⁴ und R⁵ unabhängig voneinander ausgewählt werden aus der Gruppe umfassend:
- C(=O)O⁻Y⁺ ; SO₃⁻Y⁺ ; CH₂-SO₃⁻Y⁺ ; NR₃⁺X⁻ ; OH ; PO₃H⁻Y⁺ ;
- H ; F ; CₙF₂ₙ₊₁ ; CₙH₂ₙ₊₁ ;
- NO₂ ; -O-CH₂-O- ; Imidazol-Gruppen; und Derivate von Imidazol-Gruppen;
mit Y = H, Na, K, Li, NR'₄ ; X= F, Cl, Br, I;
n ist dabei eine ganze Zahl zwischen 1 und 10 ;
R = CₘH₂ₘ₊₁ ; R' = H, CₘH₂ₘ₊₁, und Mischungen hiervon, m ist dabei eine ganze Zahl zwischen 1 und 10;

3. Gas-Diffusionsschicht für Brennstoffzellen gemäß Anspruch 2, **dadurch gekennzeichnet, dass** die Gruppen R¹, R², R³, R⁴ und R⁵ unabhängig voneinander ausgewählt werden aus der Gruppe umfassend:
- R¹ = R³ = R⁵ = H und R² = R⁴ = CF₃;
- R¹ = R⁴ = R⁵ = H und R² + R³ = -O-CH₂-O- ;
- R¹ = R³ = R⁵ = H ; R² = CF₃ und R⁴ = C(=O)O⁻Y⁺; und
- R² = R³ = R⁵ = H; R¹ = SO₃⁻Y⁺ und R⁴ = CF₃.

4. Gas-Diffusionsschicht für Brennstoffzellen gemäß einem der Ansprüche 1 bis 3, **dadurch gekennzeichnet, dass** das Kohlenstoffsubstrat aus einem Material besteht, das aus der Gruppe ausgewählt wird, die besteht aus: Kohlefaservlies; Kohlefasergewebe; Kohlefaserfilz; Kohlefaserstoff; Kohlenfaserpapier; sowie Graphit; Rußschwarz; Kohlenstoffnanoröhrchen sowie Graphen.

5. Gas-Diffusionsschicht für Brennstoffzellen gemäß einem der Ansprüche 1 bis 4, **dadurch gekennzeichnet, dass** das Kohlenstoffsubstrat eine Dicke zwischen 100 und 500 Mikrometern hat.

6. Verfahren zur Herstellung der Gas-Diffusionsschicht gemäß einem der Ansprüche 1 bis 5, **dadurch gekennzeichnet, dass** die Gas-Diffusionsschicht dadurch entsteht, dass ein Kohlenstoffsubstrat in Kontakt mit einer DiazoniumsalzLösung der Formel (I) gebracht wird, darauf folgend eine Reduktion des Diazoniumsalzes der Formel (I), in der
in der: 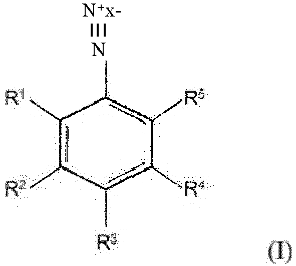
▪ mindestens zwei der Gruppen R¹, R², R³, R⁴ und R⁵ sich in einem Wasserstoffatom unterscheiden;
▪ mindestens zwei der Gruppen R¹, R², R³, R⁴ und R⁵ hydrophobe Gruppen oder hydrophile Gruppen oder eine hydrophobe Gruppe und eine hydrophile Gruppe sind.

7. Verfahren gemäß Anspruch 6, **dadurch gekennzeichnet, dass** das Kohlenstoffsubstrat oxidiert wird, bevor es in Kontakt mit der DiazoniumsalzLösung gebracht wird.

8. Verfahren gemäß Anspruch 6, **dadurch gekennzeichnet, dass** die Reduktion des Diazoniumsalzes ausgeführt wird:
- auf elektrochemischem Weg, durch elektrochemische Erzeugung eines Elektrons pro Diazoniumsalz- Molekül; oder
- auf chemischem Weg.

9. Verfahren gemäß Anspruch 6, **dadurch gekennzeichnet, dass** der Kontakt zwischen dem Kohlenstoffsubstrat und der wässrigen Lösung darin besteht:
- Aufpfropfen einer ersten Hauptseite des Substrats mit einer ersten Lösung eines ersten Diazoniumsalzes der Formel (I); dann
- Aufpfropfen einer zweiten Hauptseite des Substrats mit einer zweiten Lösung eines zweiten Diazoniumsalzes der Formel (I), wobei sich das erste und das zweite Diazoniumsalz voneinander unterscheiden.

10. Brennstoffzelle mit mindestens einer Gas-Diffusionsschicht gemäß einem der Ansprüche 1 bis 5.

## Claims

1. A gas diffusion layer for a fuel cell, made of a carbon substrate grafted with at least one aromatic group having formula (II): 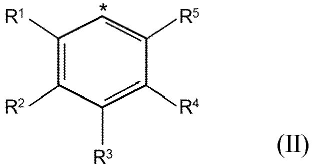 wherein:
▪ the asterisk * designates a carbon atom with no hydrogen and no Rⁱ group, with i = 1 to 5, and covalently bonded to the carbon substrate;
▪ at least two of the R¹, R², R³, R⁴, and R⁵ groups are different from a hydrogen atom;
▪ at least two of the R¹, R², R³, R⁴, and R⁵ groups are hydrophobic groups or hydrophilic groups or a hydrophobic group and a hydrophilic group.

2. The gas diffusion layer of claim 1, wherein the R¹, R², R³, R⁴, and R⁵ groups are selected independently from one another from the group comprising:
- C(=O)O⁻Y⁺; SO₃⁻Y⁺; CH₂-SO₃⁻Y⁺; NR₃⁺X⁻; OH; PO₃H⁻Y⁺;
- H; F; CₙF₂ₙ₊₁; CₙH₂ₙ₊₁;
- NO₂; -O-CH₂-O-; imidazole groups; and derivatives of imidazole groups; with Y = H, Na, K, Li, NR'₄; X= F, Cl, Br, I;
n being an integer in the range from 1 to 10;
R = CₘH₂ₘ₊₁; R' = H, CₘH₂ₘ₊₁ and mixtures thereof, m being an integer in the range from 1 to 10.

3. The gas diffusion layer of claim 2, wherein the R¹, R², R³, R⁴ and R⁵ groups correspond to one of the following combinations:
- R¹ = R³ = R⁵ = H and R² = R⁴ = CF₃;
- R¹ = R⁴ = R⁵ = H and R² + R³ = -O-CH₂-O-;
- R¹ = R³ = R⁵ = H; R² = CF₃ and R⁴ = C(=O)O⁻Y⁺; and
- R¹ = R³ = R⁵ = H; R¹ = SO₃⁻Y⁺ and R⁴ = CF₃.

4. The gas diffusion layer of any of claims 1 to 3, ***characterized* in that** the carbon substrate appears in the form of a material selected from the group comprising: carbon nonwoven; carbon fabric; carbon felt; carbon cloth; carbon paper; and graphite; carbon black; carbon nanotubes; and graphene.

5. The gas diffusion layer of any of claims 1 to 4, ***characterized* in that** the carbon substrate has a thickness in the range from 100 to 500 micrometers.

6. A method for preparing the gas diffusion layer of any of claims 1 to 5, ***characterized* in that** the gas diffusion layer is obtained by placing into contact of a carbon substrate with a solution of diazonium salt having formula (I), and then by reduction of the diazonium salt having formula (I) 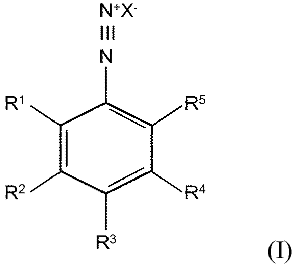 wherein:
▪ at least two of the R¹, R², R³, R⁴, and R⁵ groups are different from a hydrogen atom;
▪ at least two of the R¹, R², R³, R⁴, and R⁵ groups are hydrophobic groups or hydrophilic groups or a hydrophobic group and a hydrophilic group.

7. The method of claim 6, ***characterized* in that** the carbon substrate is oxidized prior to its placing into contact with the diazonium salt solution.

8. The method of claim 6, ***characterized* in that** the reduction of the diazonium salt is performed:
- electrochemically by electrochemical generation of an electron by a diazonium salt molecule; or
- chemically.

9. The method of claim 6, ***characterized* in that** the placing into contact of the carbon substrate with the aqueous solution comprises:
- grafting a first main surface of the substrate with a first solution of a first diazonium salt having formula (I); and then
- grafting a second main surface of the substrate with a second solution of a second diazonium salt having formula (I), the first and the second diazonium salts being different from each other.

10. A fuel cell comprising at least a gas diffusion layer according to one of claims 1 to 5.
